Europäisches Patentamt

**European Patent Office**

**Office européen des brevets**

(11) Publication number: **0 074 830**
**A2**

## (12) EUROPEAN PATENT APPLICATION

(21) Application number: **82304797.2**

(22) Date of filing: **13.09.82**

(51) Int. Cl.³: **B 25 J 11/00**

(30) Priority: **14.09.81 GB 8127725**

(43) Date of publication of application:
**23.03.83 Bulletin 83/12**

(84) Designated Contracting States:
**AT BE CH DE FR IT LI NL SE**

(71) Applicant: **UNIVERSITY OF SURREY**
**Guildford**
**Surrey GU2 5XH(GB)**

(72) Inventor: **Drazan, Paval Jan Vaclav**
**108 Broadacres**
**Guildford Surrey(GB)**

(74) Representative: **Corin, Christopher John et al,**
**Mathisen Macara & Co. Lyon House Lyon Road**
**Harrow Middx. HA1 2ET(GB)**

(54) A robotic arm.

(57) A robotic arm including a parallelogram linkage comprising first and second links (1, 2) and a drive motor (10) for providing angular displacement for the linkage. Balance means (16,17,18,19) includes a member for acting on the linkage and means for providing a force acting on the member as a result of pressure exerted by a fluid.

FIG. I.

EP 0 074 830 A2

## A ROBOTIC ARM

The present invention relates to a robotic arm comprising a parallelogram linkage incorporating first and second parallel link members and drive motor means operative angularly to displace the linkage.

In our British Patent No. 1,585,658 there is described and claimed a robotic arm comprising a shoulder which is mounted for rotation, a first parallelogram linkage constituted by two parallel links connecting the shoulder to an elbow, a second parallelogram linkage constituted by two parallel links connecting the elbow to a wrist, and a respective rotary fluidic motor mounted on the shoulder and elbow, disposed to provide angular displacement of the first parallel linkage and the second parallel linkage in the same plane and with respect to the shoulder and the elbow respectively.

The main problem to be solved by the present invention is to provide a robotic arm in which the masses of component parts are continuously counterbalanced thereby materially improving sensitivity by reducing the magnitude of necessary control forces.

The problem is solved in accordance with the present invention in that there is provided balancing means including means acting on the linkage and fluid-pressure-operated means serving to energize the means acting on the linkage.

A robotic arm in accordance with the present invention has overcome the problem of providing a sensitive arm requiring only small control forces without substantially increasing the complexity of construction.

The present invention will now be described, by way of example, with reference to the accompanying diagrammatic drawings in which:-

Figure 1 is a side view of a first example of a robotic arm; and

Figure 2 is a side view of a second example of a robotic arm.

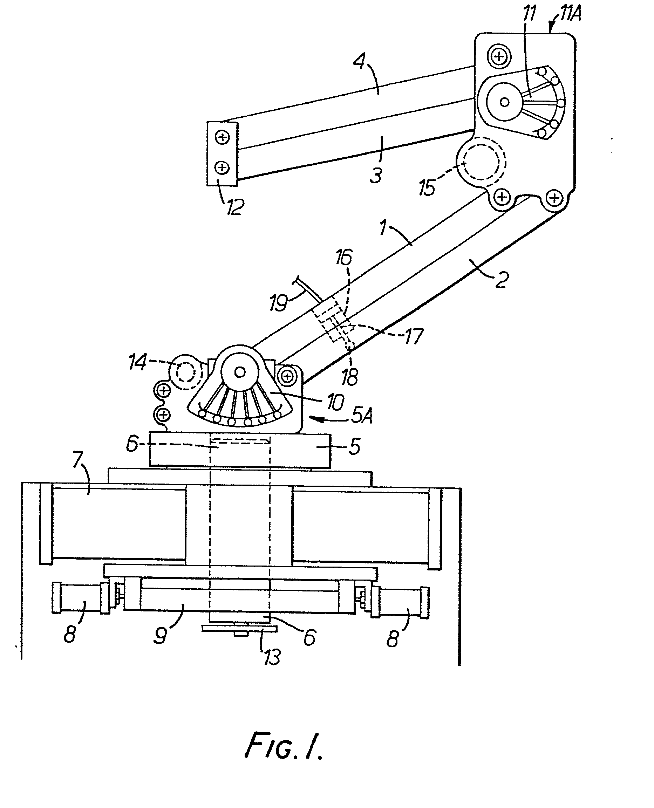

Referring first to Figure 1, the robotic arm shown therein comprises a first parallelogram linkage comprising parallel links in the form of channel-sections 1 and 2 and a second parallelogram linkage comprising parallel links in the form of channel-sections 3 and 4. A rotary plate 5 mounted on a shaft 6 can be rotated about a vertical axis by a driving air cylinder 7, braking means being provided by braking air cylinders 8 acting on a brake disc 9. The plate 5 carries a "shoulder" 5A at which there is a respective "Kinetrol" air drive motor 10 on each side of and acting on the link 1 for angularly displacing the first parallelogram linkage 1, 2 and at an "elbow" 11A there is a "Kinetrol" air drive cylinder 11 acting on the link 3 for angularly displacing the second parallelogram linkage 3, 4. A lift bracket 12 is mounted at a "wrist" for carrying an article to be moved by the robotic arm. It will, of course, be appreciated that any pneumatic actuator of the vane type can be used in place of the "Kinetrol" motor explicitly referred to.

Position encoders 13, 14 and 15 are provided for providing signals to a computer controlling the arm so as to indicate its orientation in each of the three respective degrees of freedom. A respective brake (not shown) is also provided at the shoulder and the elbow.

An air cylinder 16 is provided for counterbalancing the first parallelogram linkage 1, 2 and is carried by the channel-section member 1, the piston rod 17 of the cylinder 16 bearing against the inner face of the channel-section member 2 via a roller 18. When the arm is in use, a constant air pressure is applied to the cylinder 16 via a line 19, this pressure being chosen on the basis that it can be shown by theory that, with a given weight $W_1$ resulting in the moment $W_1$ sine $\phi$ to be counterbalanced, there is a constant force which can be applied in a direction tending to move the links 1 and 2 apart which will counterbalance the weight, irrespective of the orientation of the first parallelogram linkage.

4

To provide counterbalancing at the second parallelogram linkage, there is provided, opposite the motor 11 and acting on the same axis, a further "Kinetrol" air drive motor or other vane type motor (not shown). The moment to be counterbalanced is $W_2 \cos\theta.l$, where $W_2$ is the net weight acting, $\theta$ is the angle between the second parallelogram linkage and the horizontal and $l$ is the distance from the centre of gravity of the weight to the axis on which the motor acts. For small variations of $\theta$, counterbalancing can be substantially achieved by applying a constant pressure to the vane of the motor but for greater accuracy or large variations of $\theta$, this pressure can be varied in use of the arm in accordance with the above formula with the aid of a suitable sensor and control means known per se.

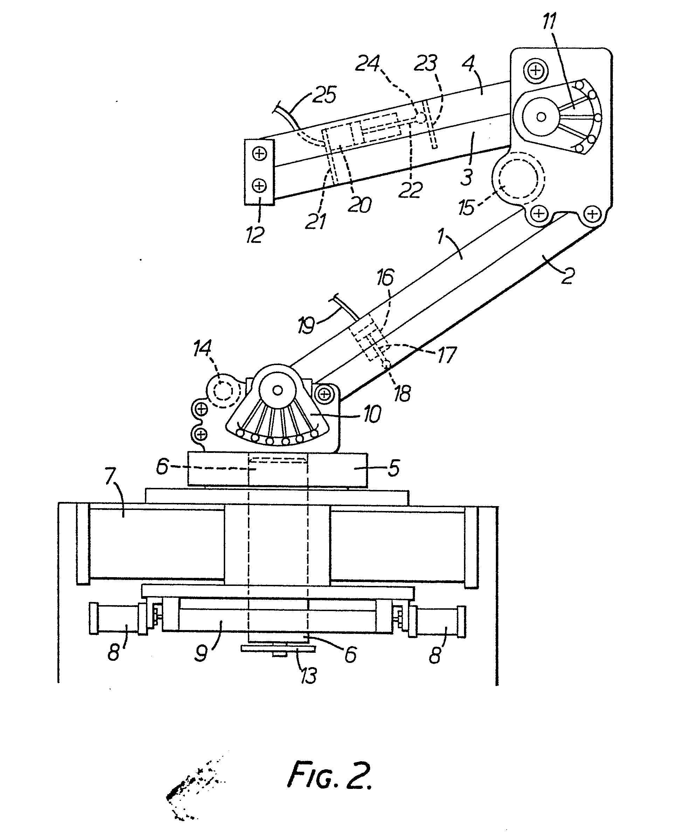

Referring now to Figure 2 in which items which correspond with items in Figure 1 have the same reference numerals, instead of the second motor at the "elbow" there is provided for counterbalancing the second parallelogram linkage 3, 4 balancing means similar to the balancing means used for the first parallelogram linkage 1, 2. These balancing means include an air cylinder 20 carried on the channel-section member 3 by a bracket 21 and its piston rod 22 engages a bracket 23 on the channel-section member 4 through a roller 24. Again, it can be shown by theory that to counterbalance a given weight, this can be achieved by applying a constant pressure to the cylinder 20 via a line 25 irrespective of the orientation of the second parallelogram linkage.

In each of the hereinbefore described embodiments, an air motor counterbalancing, as at the "elbow" 11A of Figure 1, could be used at the "shoulder" 5A instead of the assembly 16, 17, 18 and 19.

It will be understood that for the lower parallelogram linkage the moment to be counterbalanced will be $W_1$ sine 0 whereas the balancing torque required for the upper section is $W_2$ cos θ.1 and over an appreciable portion of the range of movement, i.e. from $45^{\circ}$ below the horizontal to approximately $45^{\circ}$ above the horizontal the variation from a constant value will be small.

6

0074830

CLAIMS

1. A robotic arm comprising a parallelogram linkage incorporating first and second parallelogram link members (1,2) and drive motor means (10) operative angularly to displace the linkage,

characterised by

balancing means (for example 16,17,18,19) including means (17,18) acting on the linkage (2) and fluid-pressure-operated means (16,19) serving to energize the means (17,18) acting on the linkage.

2. A robotic arm according to claim 1, characterised in that the means (17,18) acting on the linkage abuts one link member (2) and the fluid pressure-operated means (16,19) is mounted on the other link member (1).

3. A robotic arm according to claim 1 or claim 2 characterised in that the means (17,18) acting on the linkage comprises a piston rod (17) and a roller (18) and the fluid-pressure-operated means comprises a cylinder (16) and a pressure fluid supply line (19).

4. A robotic arm according to claim 1, characterised in that the balancing means is mounted to act directly at a pivot axis of the parallelogram linkage and comprises an air motor.

5. A robotic arm according to any one of claims 1 to 4, characterised by brake means (8,9) operative to control motion of the parallelogram linkage.

6.    A robotic arm according to any one of claims 1 to 5 characterised by air motor drive means (10) operative to drive the parallelogram linkage at a pivotal axis thereof.

7.    A robotic arm according to any one of claims 1 to 6 characterised by position encoder means (for example 15) operative to sense the angular orientation of the parallelogram linkage.

8213:5PM3

FIG. I.

FIG. 2.